Europäisches Patentamt

European Patent Office

Office européen des brevets

(11) Veröffentlichungsnummer: **0 311 778 B1**

(12) **EUROPÄISCHE PATENTSCHRIFT**

(45) Veröffentlichungstag der Patentschrift: **28.10.92**

(21) Anmeldenummer: **88113999.2**

(22) Anmeldetag: **27.08.88**

(51) Int. Cl.⁵: **B23F 19/06**, B23F 19/05

(54) **Verfahren zum Feinbearbeiten von balligen Zahnflanken an insbesondere gehärteten Zahnrädern.**

(30) Priorität: **13.10.87 DE 3734652**
**12.07.88 DE 3823560**

(43) Veröffentlichungstag der Anmeldung:
**19.04.89 Patentblatt 89/16**

(45) Bekanntmachung des Hinweises auf die
Patenterteilung:
**28.10.92 Patentblatt 92/44**

(84) Benannte Vertragsstaaten:
**DE FR GB IT**

(56) Entgegenhaltungen:
**DE-A- 2 912 545**
**DE-A- 3 207 924**
**DE-A- 3 441 188**
**DE-C- 724 918**
**DE-C- 3 123 502**

(73) Patentinhaber: **HURTH MASCHINEN UND
WERKZEUGE G.m.b.H.
Moosacher Strasse 36
W-8000 München 40(DE)**

(72) Erfinder: **Schapp, Udo, Dr. Ing.
Untere Seefeldstrasse 41
W-8031 Wessling(DE)**
Erfinder: **Lohrer, Josef
Hildebaldstrasse 3
W-8000 München 40(DE)**

## Beschreibung

Die Erfindung betrifft gemäß Oberbegriff von Patentanspruch 1 und 2 ein Verfahren zum Feinbearbeiten von balligen Zahnflanken an insbesondere gehärteten Zahnrädern und geht aus von einem Stand der Technik, wie er von der DE-C- 3 142 843 bekannt ist. Die dort beschriebene Maschine ist in erster Linie für das Feinbearbeiten der Zahnflanken von (noch) nicht gehärteten Zahnrädern bestimmt, also für das Zahnradschaben mit einem Schabzahnrad, und zwar nach dem Parallel-, Diagonal- und Underpass-Verfahren. Sie ist aber bedingt auch für das Feinbearbeiten der Zahnflanken von gehärteten Zahnrädern brauchbar, also für das Honen, Feinen, Schabschleifen usw. (eine einheitliche Definition dieser Verfahren existiert bisher nicht) mit einem abrasiven Werkzeug. Insbesondere beim Diagonal- und Underpass-Verfahren wird das Werkzeug jedoch ziemlich schnell abgenutzt, so daß diese Verfahren trotz der kürzeren Bearbeitungszeit gegenüber dem Parallelverfahren bisher keine nennenswerte Verbreitung gefunden haben.

Wenn die zu bearbeitenden Zahnräder ballige Flanken bekommen sollen, dann können im Parallel- und Diagonal-Verfahren nur über ihre ganze Breite gleichmäßig ballige Flanken erzeugt werden, da das Werkzeug in Abhängigkeit vom Längs- bzw. Diagonalvorschub, zu dem noch eine radiale Zustellung kommt, eine Schwenkbewegung ausführt.

Es ist auch ein Verfahren zum Feinbearbeiten von gehärteten Zahnrädern bekannt ("Werkstatt und Betrieb", 118. Jg.(1985), Heft 8, Seiten 505 bis 509, hier: S. 506), bei dem das abrasive Werkzeug parallel zur Werkstückachse bewegt wird und intermittierend dazu eine radiale Zustellung erfolgt, wobei zum Herstellen balliger Zahnflanken dem Längsvorschub eine Schwenkbewegung des Werkstücks überlagert wird. Der Längsvorschub erfordert aber - wie auch beim eingangs genannten Verfahren - lange Bearbeitungszeiten und sollte deshalb vermieden werden.

Bei einem anderen bekannten Verfahren wird das Werkzeug ausschließlich radial zugestellt, was eine kürzere Bearbeitungszeit ermöglicht. Um die Werkstück-Verzahnung auf ihrer ganzen Breite zu bearbeiten, muß sich die Werkzeug-Verzahnung an die Werkstück-Verzahnung anschmiegen, was bei der Werkzeug-Herstellung gewisse Probleme mit sich bringt. Diese Probleme treten verstärkt auf, wenn ballige Zahnflanken erzeugt werden sollen, da die Balligkeit des Werkstücks zusätzlich in komplementärer Form in das Werkzeug eingearbeitet werden muß.

Nur in ihren Endbereichen, d.h. in den den Zahn-Stirnflächen benachbarten Bereichen ballige Zahnflanken können nur im Underpass-Verfahren mit außerordentlich schwierig herstellbaren Werkzeugen erzeugt werden.

## Aufgabe

Ausgehend von den aufgezeigten Nachteilen der bekannten Verfahren liegt der Erfindung die Aufgabe zugrunde, das eingangs genannte Verfahren so weiterzubilden, daß ballige Zahnflanken an gehärteten Zahnrädern in einer annehmbaren Zeit bei möglichst geringem Werkzeugverschleiß erzeugt werden können.

## Lösung

Diese Aufgabe wird gelöst mit einem Verfahren, das die kennzeichnenden Merkmale der Ansprüche 1 und 2 aufweist. Es hat sich für die Maschineneinstellung bzw. -programmierung als sinnvoll erwiesen, die Werkstückzähne erst ganz normal feinzubearbeiten und erst am Schluß an den Zahnenden das für die Balligkeit überflüssige Material abzutragen.

Eine wesentliche Verbesserung wird mit dem Verfahren gemäß Patentanspruch 2 erreicht, das mit dem Merkmal des Patentanspruchs 3 ergänzt werden kann. Es wurde nämlich gefunden, daß der erwähnte erhöhte Werkzeugverschleiß von der größeren Härte an den Enden der Werkstückzähne herrührt. Deshalb soll das Abarbeiten des Bearbeitungsaufmaßes gewissermaßen "von innen her" erfolgen, d.h. die Bearbeitung erfolgt zunächst primär im etwas weniger harten Bereich der Zahnflanken ohne daß die Balligkeit berücksichtigt wird, und erst gegen Ende der Feinbearbeitung wird das Material an den sehr harten Zahnenden abgetragen und dabei gleichzeitig die gewünschte Balligkeit erzeugt. Die Maschine gemäß der DE-C-3 142 843 ist zur Ausführung des erfindungsgemäßen Verfahrens nicht geeignet. Eine passende Maschine wird weiter unten beschrieben werden.

Der zunächst bearbeitete etwas weniger harte Bereich kann, solange noch eine Zustellbewegung (Tiefenvorschub) erfolgt, gleich bleiben, er kann aber auch nach und nach vergrößert werden (Patentansprüche 4 und 5). Der Achskreuzpunkt sollte aber nie über die Stirnkanten der Zahnflanken hinaus wandern.

Wegen der Gefahr einer Sekundärgratbildung an den spitzen Zahnenden bei Schrägverzahnungen läßt man die Vorschubbewegungen zweckmäßigerweise außermittig beginnen (Patentanspruch 6), und zwar an einem den stumpfen Zahnenden benachbarten Punkt, der gleichzeitig ein Umkehrpunkt der Vorschubbewegungen sein kann. An diesem Punkt sollte auch zu Beginn der Feinbearbeitung die Drehzahl des Werkzeug-Werkstück-Paares hochgefahren werden.

Das erfindungsgemäße Verfahren kann mit den Merkmalen der Patentansprüche 7 oder 8 weiter ausgestaltet werden, was der Qualität der auf den Werkstückflanken erzeugten Oberflächen sehr zugute kommt.

Bei dem in Rede stehenden Verfahren wird das Werkzeug immer relativ zum Werkstück in einer Richtung bewegt, die schräg zur Werkstückachse verläuft. Wie beim Zahnrad-Schaben nach dem Diagonalverfahren könnte dabei mit einem kurzen Vorschubweg gearbeitet werden, wenn die Werkzeugverzahnung entsprechend korrigiert, d.h. hohlballig ausgeführt, ist, um die Verzahnung des Werkstücks über ihre gesamte Breite zu bearbeiten. Dank der erfindungsgemäßen Maßnahme, das Werkzeug am Ende der Feinbearbeitung eine Kippbewegung ausführen zu lassen, um eine Balligkeit auf den Zahnflanken zu erzeugen, ist es jedoch möglich, ein Werkzeug mit nicht korrigierten Zahnflanken zu verwenden (Patentanspruch 9).

Je nach der Breite des Werkzeugs und dem für die Vorschubrichtung gewählten Winkel zur Werkstückachse genügt, insbesondere beim Verfahren nach dem Patentanpruch 1 oder bei den Vorschubbewegungen ohne Tiefenvorschub nach den Patentansprüchen 2 oder 4, schon ein relativ kurzer Vorschubweg, um den Eingriffspunkt bzw. die gemeinsame Normale von einer Stirnseite der Werkstückverzahnung über die Zahnbreite zur anderen Stirnseite zu verlegen. Es ist deshalb vorteilhaft, das Verfahren nach Patentanspruch 10 weiterzubilden, um einen möglichst optimalen Vorschubweg zu bekommen.

Zeichnungen

Mehrere Ausführungsbeispiele sind in den Zeichnungen dargestellt. Es zeigen

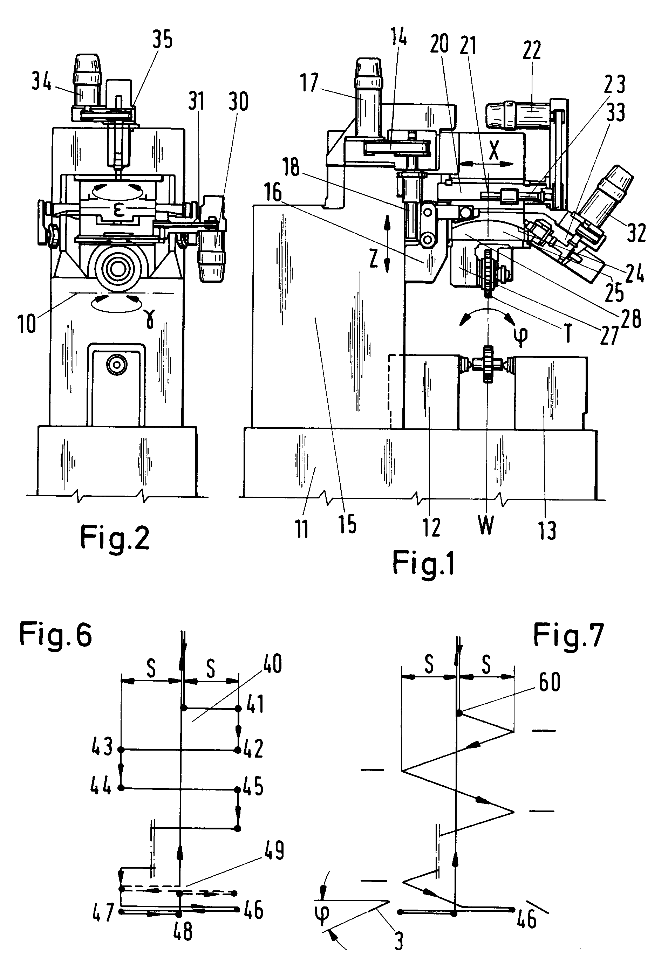

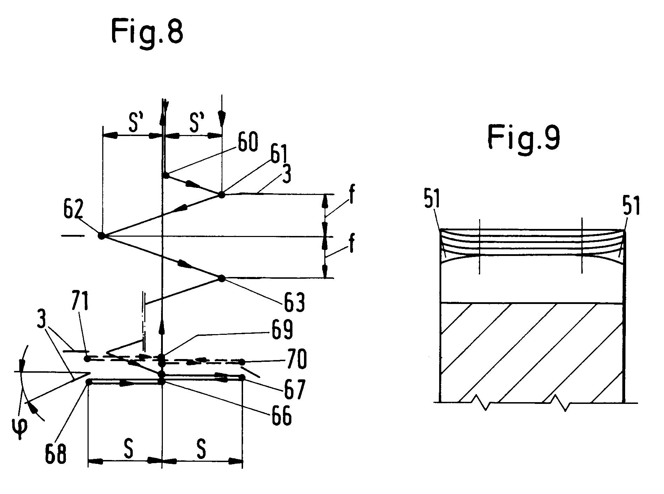

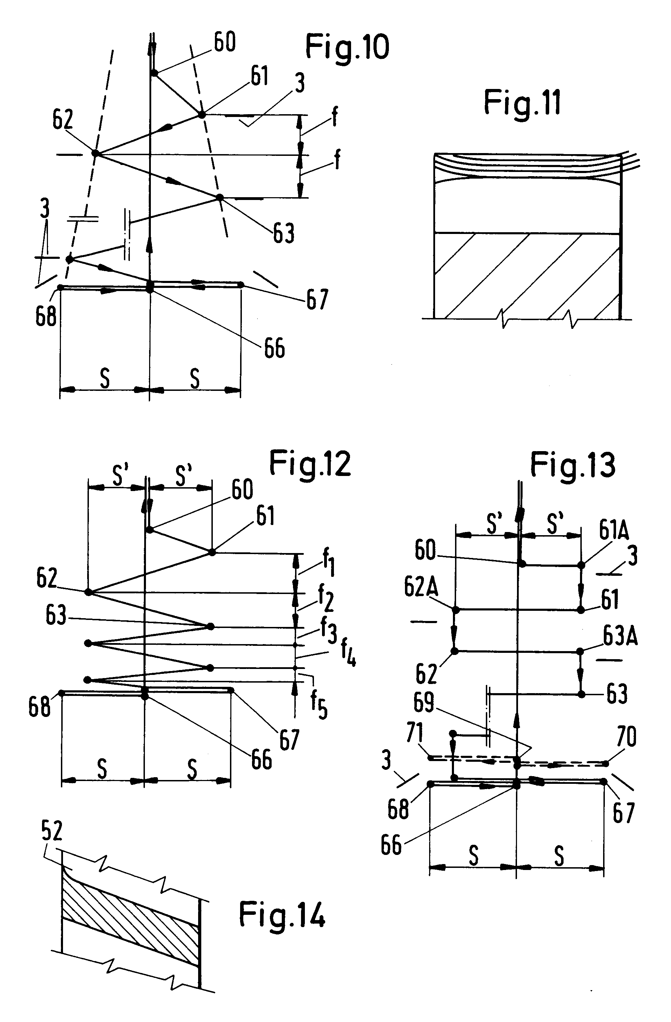

Fig. 1 und 2
eine Maschine, auf der das Verfahren ausgeführt werden kann, in einer Front- und einer Seitenansicht,
Fig. 3
das Werkzeug von Fig. 1 im Eingriff mit einem Werkstück in einer Seitenansicht,
Fig. 4
das Werkzeug mit dem Werkstück in einer Draufsicht,
Fig. 5
die Situation von Fig. 4 in vergrößerter Darstellung und stark vereinfacht mit verschiedenen Stellungen des Werkzeugs,
Fig. 6, 7 und 8
schematisch drei Beispiele für einen Verfahrensablauf nach der Erfindung,
Fig. 9
mehrere Phasen der Spanabnahme an einem Werkstückzahn beim Verfahrensablauf nach Fig. 8,
Fig. 10
schematisch ein anderes Beispiel für einen Verfahrensablauf nach der Erfindung,
Fig. 11
mehrere Phasen der Spanabnahme an einem Werkstückzahn beim Verfahrensablauf nach Fig. 10,
Fig. 12 und 13
schematisch zwei weitere Beispiele für Verfahrensabläufe nach der Erfindung,
Fig. 14
einen Querschnitt durch einen Zahn eines schrägverzahnten Werkstücks, und
Fig. 15
die Anordnung sensitiver Einrichtungen auf der Maschine nach Fig. 1.

Beschreibung der Erfindungsbeispiele

In den Figuren 1 und 2 ist eine sogenannte Hartschab-oder Schabschleifmaschine dargestellt, auf der gehärtete Zahnräder (Werkstücke) feinbearbeitet werden. Auf einem Bett 11 ist ein Werkstück W zwischen Reitstöcken 12, 13 drehantreibbar aufgenommen. Der für den Drehantrieb erforderliche Motor (nicht gezeichnet) ist in einem Ständer 15 untergebracht, an dem ein Zustellschlitten 16 senkrecht verschiebbar (Pfeilrichtung Z) und dafür mit einem Motor 17 über einen Riementrieb 14 und eine Spindel 18 antreibbar angeordnet ist. In einer nicht gezeigten Rundführung im Zustellschlitten 16 ist ein Vorschubschlitten 20 um eine vertikale Achse 21 dreheinstellbar aufgenommen. Der Vorschubschlitten 20 ist relativ zum Zustellschlitten 16 horizontal hin und her verschiebbar (Pfeilrichtung X), wofür ein Motor 22 und eine Spindel 23 vorgesehen sind.

In einer Bogenführung 24 an der Unterseite des Vorschubschlittens 20 ist eine Wiege 25 angeordnet, an der in einer nicht gezeigten Rundführung ein Werkzeugkopf 27 um eine vertikale Achse 28 dreheinstellbar aufgenommen ist. Im Werkzeugkopf 27 ist ein Hartschabrad (Werkzeug T), auf das noch eingegangen wird, drehbar gelagert. Die Achsen 21 und 28 fluchten miteinander und liegen in der mittleren Rotationsebene 29 des Werkzeugs T.

Durch Verdrehen des Werkzeugkopfes 27 zusammen mit der Wiege 25 um die Achse 28, wofür ein Motor 30 mit einem Gestänge 31 vorgesehen ist, wird ein Achskreuzwinkel $\gamma$ zwischen der Achse 3 des Werkzeugs T und der Achse 4 des Werkstücks W eingestellt. Die Achsen 3 und 4 liegen dabei in zueinander parallelen Ebenen. Durch Verdrehen des Vorschubschlittens 20 um die Achse 21, wofür ein Motor 34 mit einem Getriebe 35 vorgesehen sind, wird ein Diagonalwinkel $\epsilon$, unter dem die Vorschubrichtung X des Werkzeugs T zur Werkstückachse 4 erfolgt, eingestellt. In den Figuren 1, 2 sind der besseren Übersichtlichkeit halber das Werkzeug T und das Werkstück W so dargestellt, als seien der Achskreuzwinkel $\gamma$ = 0° und der Diagonalwinkel $\epsilon$ = 0°; das hieße daß ohne Achskreuzung (was in der Praxis nicht vorkommt) im Parallelverfahren gearbeitet würde.

Die Wiege 25 mit dem Werkzeugkopf 27 und dem Werkzeug T sind in der Bogenführung 24 um eine Achse 10 schwenkbar, die zumindest annähernd den Wälzzylinder des Werkzeugs T an seiner Unterseite tangiert. Für diese Schwenkbewegung $\phi$ ist ein Motor 32 mit einem Schneckentrieb 33 vorgesehen.

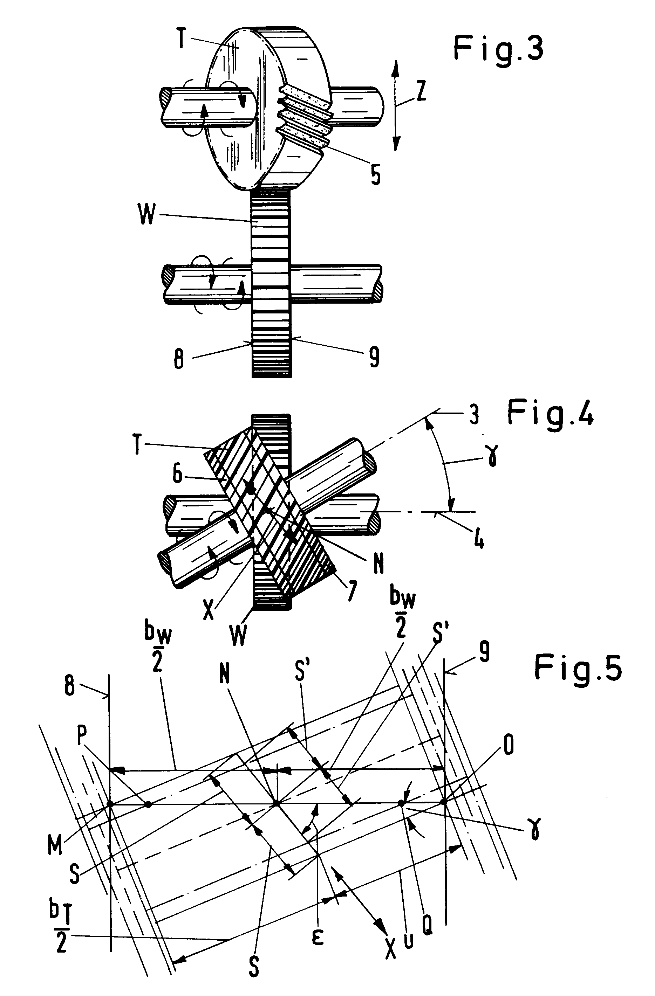

Für das Feinbearbeiten der Zahnflanken des Werkstücks W werden das Werkzeug T und das Werkstück W miteinander in Zahneingriff gebracht, und zwar unter gekreuzten Achsen 3, 4 (Fig. 3 und 4). Das Werkzeug T besitzt zumindest an den Flanken 5 seiner Zähne eine abrasive, d.h. keine einheitlich gerichteten Schneidkanten aufweisende Oberfläche. Es besteht in der Regel aus einem verzahnten metallischen Grundkörper, dessen Zahnflanken 5 eine Beschichtung mit Hartstoffkörnern, z.B. aus kubischem Bornitrid (CBN) oder Diamant haben. (Wenn noch nicht gehärtete Zahnräder bearbeitet werden sollen, kann das Werkzeug T auch ganz aus Keramik oder Kunstharz mit darin eingebetteten Schneidkörnern bestehen.) Die Zähne des Werkzeugs T sind in Zahnlängsrichtung nicht korrigiert. Derartige Zähne sind insbesondere bei beschichteten Werkzeugen leichter mit der erforderlichen Genauigkeit herzustellen als korrigierte Zähne, weil eine Korrektur in die mit CBN oder gar mit Diamant beschichteten Zähne nur unter einem extrem hohen Arbeits-, Zeit- und Kostenaufwand eingearbeitet werden kann.

Für den Bearbeitungsvorgang wird das Werkzeug T oder - wie auf der oben beschriebenen Maschine - das Werkstück W in Rotation versetzt, das jeweils andere Glied wird über die Verzahnungen mitgedreht. Während des Rotierens wird das Werkzeug T relativ zum Werkstück W in Pfeilrichtung X hin- und herbewegt. Diese Vorschubbewegung erfolgt in einer Ebene, die parallel liegt zu den Achsen 3, 4. Außer der Vorschubbewegung X erfolgt intermittierend oder kontinuierlich dazu eine radiale Zustellung in Pfeilrichtung Z, auch kann die Drehrichtung ein- oder mehrmals gewechselt werden. Auf diese Bewegungen wird noch eingegangen.

Zwischen dem Werkzeug T und dem Werkstück W besteht theoretisch eine Punktberührung im Eingriffspunkt N, der auf der sogenannten gemeinsamen Normalen liegt, einer gedachten Verbindungslinie zwischen den Achsen 3, 4 und senkrecht dazu gerichtet. Während der Vorschubbewegung X verändert der Eingriffspunkt seine Lage zwischen den Stirnseiten 8, 9 des Werkstücks W, d.h. er wandert von der einen Extremstellung M an der einen Stirnseite 8 über die gezeigte Mittelstellung N bis zur anderen Extremstellung 0 an der anderen Stirnseite . Damit dies bei möglichst kurzem Vorschubweg möglich ist, müssen ganz bestimmte Zusammenhänge beachtet werden.

Es wurde gefunden, daß zwischen dem Diagonalwinkel $\epsilon$, d.h. dem Winkel zwischen der Achse 4 und der Vorschubrichtung X, und dem Achskreuzwinkel $\gamma$ zwischen den Achsen 3 und 4 die Beziehung

$$\tan \mathcal{E} = \frac{1}{\tan \gamma}$$

bestehen soll.

Diese Größen sind zum besseren Verständnis in Fig. 5 dargestellt. Außerdem ist dort die Strecke auf dem Vorschubweg, die zurückzulegen ist, um den Eingriffspunkt von der gezeigten Mittelstellung in die Extremstellung 0 zu bringen, mit s bezeichnet und der dann in der Projektion des Werkstück W noch überdeckende rechte Abschnitt der halben Breite des Werkzeugs T mit u. $b_T$ und $b_W$ bezeichnen die Breiten von Werkzeug T und Werkstück W.

Bei dem in Fig. 6 gezeigten Verfahrensablauf wird das Werkzeug T zunächst mit dem Werkstück W in Zahneingriff gebracht, und zwar durch eine anfangs schnelle, dann erheblich langsamere radiale Zustellung im Sinne einer Achsabstandsverringerung, bis ein Anfangspunkt 40 für die Bearbeitung erreicht ist, an dem zwischen Werkzeug T und Werkstück W Zweiflankenanlage besteht. Das Werkstück wurde schon etwas früher, als noch Spiel zwischen den Zähnen von Werkzeug T und Werkstück W vorhanden war, in Rotation versetzt. Seine Zähne versetzen das Werkstück W in Rotation. Bei einer anschließenden Vorschubbewegung zu einem Punkt 41 wird der Eingriffspunkt von der Mittelstellung N in eine Extremstellung 0 an die Stirnseite 9 verschoben. Hier erfolgt eine Zustellbewegung zu einem Punkt 42, ehe eine entgegengesetzt gerichtete Vorschubbewegung zu einem Punkt 43 erfolgt, bei dem der Eingriffspunkt seine andere Extremstellung M an der gegenüberliegenden Stirnseite 8 des Werkstücks erreicht. Hier erfolgt eine weitere Zustellung zu einem Punkt 44 und wieder eine Vorschubbewegung zu einem Punkt 45. Diese Schritte können mehrmals wiederholt werden. Die letzte Vorschubbewegung von einem Punkt 46 zu einem Punkt 47 und zurück zu einem Punkt 48, an dem der Eingriffspunkt wieder in Mittelstellung N liegt, erfolgt ohne vor- oder zwischengeschaltete Zustellbewegung. Ehe jetzt das Werkzeug T und das Werkstück W wieder auseinander gefahren werden, kann ein weiterer Hin- und Hergang (Punkte 49,50,51,52) eingefügt werden, nachdem das Werkzeug T um einen ganz geringen Betrag vom Punkt 48 auf einen Punkt 49 zurückgezogen worden ist. Dieser Hin-und Hergang dient der Glättung der Zahnflanken, ohne daß noch merklich Material abgetragen wird.

Bei dem in Fig. 7 gezeigten Verfahrensablauf erfolgen die Vorschub- und Zustellbewegungen, von einem Anfangspunkt 60 ausgehend, gleichzeitig, d.h. die Zustellbewegungen werden den Vorschubbewegungen überlagert. Nach mehreren Hin- und Hergängen wird ein Punkt 61 erreicht. Jetzt kann das Verfahren weiter ablaufen wie im Beispiel nach Fig. 6 ab Punkt 46. Soll jedoch eine Längsballigkeit an den Werkstückzähnen erzeugt werden, dann wird das Werkzeug T bei den letzten Hin-und Hergängen um die Achse 10 um einen Winkel $\phi$ gekippt. In Fig. 7 ist diese Kippbewegung jeweils an den Umkehrpunkten durch kurze Striche, die die Werkzeugachse 3 symbolisieren, dargestellt. Mit dieser Kippbewegung dringen die Werkzeugzähne zu den Stirnseiten 8,9 hin tiefer in das Werkstück ein und tragen dort mehr Material ab, wodurch eine ballige Verzahnung entsteht.

Die Drehrichtung kann ein- oder mehrmals zwischen den Punkten 40 und 52 oder nach dem Punkt 60 gewechselt werden, erforderlich ist der Drehrichtungswechsel bei der Zweiflankenanlage jedoch nicht in jedem Fall; vielmehr wird man sehr häufig ohne einen Drehrichtungswechsel, der ja Zeit erfordert, ein befriedigendes Bearbeitungsergebnis bekommen.

Mit dem anhand der Fig. 7 beschriebenen Verfahren können auch konische und konisch-ballige Zahnflanken am Werkstück erzeugt werden. In beiden Fällen ist die Zustellung in der einen Richtung der Vorschubbewegung immer größer zu machen als in der anderen Richtung. Für konisch-ballige Zähne wird dann am Ende noch die Kippbewegung entsprechend überlagert.

Bei dem in Fig. 8 gezeigten Verfahrensablauf wird das Werkzeug T zunächst mit dem Werkstück W in Zahneingriff gebracht, und zwar durch eine anfangs schnelle, dann erheblich langsamere radiale Zustellung im Sinne einer Achsabstandsverringerung, bis ein Anfangspunkt 60 für die Bearbeitung erreicht ist, an dem zwischen Werkzeug T und Werkstück W Zweiflankenanlage besteht. Das Werkstück wurde schon etwas früher, als noch Spiel zwischen den Zähnen von Werkzeug T und Werkstück W vorhanden war, in Rotation versetzt. Seine Zähne versetzen das Werkstück W in Rotation. Bei einer anschließenden Vorschubbewegung zu einem Punkt 61 wird der Eingriffspunkt von der Mittelstellung N zur Stirnseite 9 hin bis zu einem Umkehrpunkt P verschoben. Gleichzeitig mit der Vorschubbewegung erfolgt eine Zustellbewegung, d.h. die Zustellbewegung wird - auch bei den folgenden Vorschubbewegungen - der Vorschubbewegung überlagert. Vom Umkehrpunkt P aus erfolgt eine entgegengesetzt gerichtete Vorschubbewegung zu einem Punkt 62, bei dem der Eingriffspunkt einen Umkehrpunkt Q erreicht. Von hier aus erfolgt eine wieder entgegengesetzt gerichtete Vorschubbewegung zu einem Punkt 63, bei dem der Eingriffspunkt wieder den Umkehrpunkt P erreicht. Diese wechselnden Vorschubbewegungen mit überlagerten Zustellbewegungen werden so lange wiederholt, bis bei einem Punkt 66 der Soll-Achsabstand zwischen der Werkstückachse 4 und der Werkzeugachse 5 erreicht ist. Bis jetzt hat der Achskreuzpunkt immer nur die Strecke 2 . s' zurückgelegt, nicht aber die Strecke 2 . s, die erforderlich wäre, um die Zahnflanken über die gesamte Zahnbreite zu bearbeiten. Das bedeutet, daß die Werkstückzähne nur in einem mittleren Abschnitt bearbeitet wurden, während auf den anschließenden, den Zahn-Stirnseiten zugewendeten Abschnitte nur ein unvollständiger Späneabtrag mit den nicht voll in Eingriff stehenden Seitenbereichen 6, 7 der Werkzeug-Zahnflanken 5 erfolgt ist. Wie aus Fig. 7 erkennbar ist, wo die Spanabnahme während mehrerer Vorschubbewegungen schematisch gezeigt ist, hat das Werkstück W ganz leicht hohlballige Zahnflanken, weil an den harten Zahn-Stirnkanten bisher noch fast keine Spanabnahme erfolgt ist.

Nach Erreichen des Soll-Achsabstands wird noch mindestens eine hin- und hergehende Vorschubbewegung ausgeführt. Diese letzten Vorschubbewegungen vom Punkt 66 zu einem Punkt 67, zurück nach Punkt 68 und wieder zurück zum Punkt 66, an dem der Eingriffspunkt wieder in der Neutralstellung N liegt, erfolgt ohne Zustellbewegung. Ehe jetzt das Werkzeug T und das Werkstück W wieder auseinander gefahren werden, kann ein weiterer Hin- und Hergang (Punkte 69, 70, 71, 69) eingefügt werden, nachdem das Werkzeug T um einen ganz geringen Betrag vom Punkt 66 auf einen Punkt 69 zurückgezogen worden ist. Dieser Hin-und Hergang dient der Glättung der Zahnflanken, ohne daß noch merklich Material abgetragen wird. Von besonderer Bedeutung ist, daß die Punkte 67, 68 auf den Stirnkanten der Werkstückzähne liegen, der Achskreuzpunkt also immer die Strecke 2 . s zurücklegt, und das Werkzeug T während der letzten Hin- und Hergänge um die Achse 10 um einen Winkel $\phi$ gekippt wird. In Fig. 8 ist diese Kippbewegung jeweils an den Umkehrpunkten durch kurze Striche, die die Werkzeugachse 3 symbolisieren, dargestellt, Mit dieser Kippbewegung dringen die Werkzeugzähne zu den Stirnseiten 8, 9 hin tiefer in das Werkstück ein und tragen dort mehr Material ab, wodurch eine ballige Verzahnung entsteht. Wie Fig. 9 zeigt, handelt es sich bei diesem Materialabtrag um die mit 51 bezeichneten keilartigen Randbereiche, in die das Werkzeug vom spitzen Winkel aus eindringt, so daß sich eine langsam zunehmende Eindringtiefe ergibt. Auf diese Weise wird das Werkzeug geschont und weniger abgenutzt als beim herkömmlichen Verfahren.

Die Drehrichtung kann auch hier ein- oder mehrmals zwischen den Punkten 60 und 72 gewechselt werden, erforderlich ist der Drehrichtungswechsel bei der Zweiflankenanlage jedoch nicht in jedem Fall; vielmehr wird man sehr häufig ohne einen Drehrichtungswechsel, der ja Zeit erfordert, ein befriedigendes Bearbeitungsergebnis bekommen.

Anstatt, wie vorstehend beschrieben, immer gleich lange Vorschubbewegungen vorzusehen, können diese auch mit fortschreitendem Tiefenvorschub wenigstens einmal vergrößert werden, wie das in Fig. 10 gezeigt ist. Es versteht sich, daß der mittlere Abschnitt, in dem die Werkstückzähne bearbeitet werden, mit jeder Vorschubvergrößerung länger wird (Fig. 11).

Zur Verbesserung der Oberfläche der Werkstück-Zahnflanken können auch die den Vorschubbewegungen überlagerten Tiefenvorschübe (Zustellbewegungen) derart verändert werden, daß anfangs größere und dann immer kleiner werdende Zustellbewegungen vorgesehen werden. In Fig. 12 ist jeder Zustellhub $f_1$, $f_2$, ... kleiner als der vorhergehende, im Gegensatz zu Fig. 8, wo alle Zustellhübe f gleich groß sind.

Die Zustellbewegungen müssen den Vorschubbewegungen nicht überlagert sein, sie können auch unabhängig davon erfolgen, z.B. an den Umkehrpunkten, wie das in Fig. 13 dargestellt ist. Dabei sind die in Fig. 8 benutzten Größen zugrundegelegt. Die Umkehrpunkte haben dieselben Nummern und bei den entsprechenden Endpunkten der Vorschubbewegungen tragen diese Nummern den Zusatz A. Auch die diskontinuierlichen Zustellbewegungen können anfangs größer sein und dann kleiner werden, wie es anhand der Fig. 12 für die kontinuierlichen Zustellbewegungen beschrieben wurde, und die Vorschubbewegungen können in derselben Art vergrößert werden, wie es anhand der Fig. 10 und 11 beschrieben wurde.

Wegen der bei schrägverzahnten Zahnrädern bestehenden Gefahr seiner Sekundärgratbildung 52 an den spitzen Zahnenden (Fig. 14) legt man den anfänglichen Zahneingriff zwischen Werkzeug T und Werkstück W zweckmäßigerweise so, daß der Anfangspunkt 60 mit dem oben erwähnten Punkt 61 an dem dem stumpfen Zahnende benachbarten Bereich der Zahnflanke zusammenfallen. In Fig. 6 ist das mit einer strichlierten Linie angedeutet.

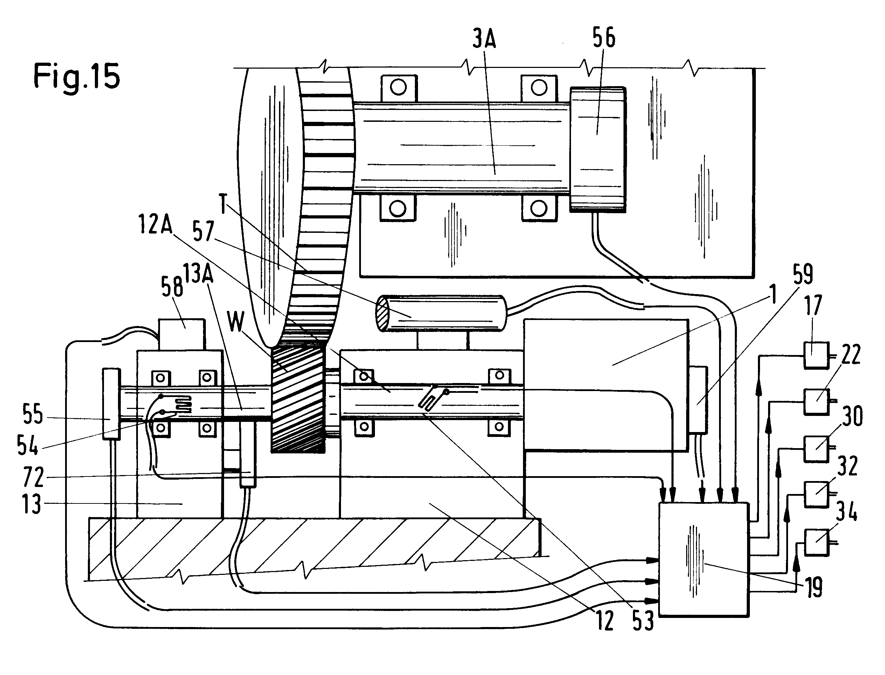

Der Übergang von anfangs größeren auf kleinere Zustellbewegungen muß nicht nach einem mehr oder minder starren, vom Maschinenbediener beeinflußbaren Schema erfolgen, sondern kann auch durch eine sensitive Einrichtung gesteuert werden in Abhängigkeit von im Maschinensystem gemessenen Kräften, Spindel-Durchbiegungen, Drehmomenten, Geräuschen und/oder sonstigen Schwingungen. Als Sensoren (Fig. 15) kommen beispielsweise an geeigneten Stellen angebrachte Dehnmeßstreifen (DMS) 53, 54 in Frage: auf der Antriebsspindel 12A angeordnete DMS 53 können Drehmomente messen und auf der Reitstockspindel 13A angeordnete DMS 54 oder Verlagerungsaufnehmer können Kräfte messen. Schwingungen können detektiert werden direkt über Tangentialbeschleunigungsaufnehmer 55, 56 an der Reitstockspindel 13A und/oder an der Werkzeugspindel 3A oder indirekt über abgestrahlte Geräusche durch ein Mikrofon 57 in der Nähe des Werkzeug-Werkstück-Paares oder durch Körperschallaufnehmer 58 auf einem Maschinenteil, z.B. auf dem Reitstock 13. Die von dem Sensor oder ggf. den Sensoren ermittelten Werte werden einer Maschinensteuerung 19 zugeführt, desgleichen die von einem Drehübertrager 59 am Antriebsmotor 1 ermittelten Werte, werden dort mit entsprechenden vorgegebenen Werten verglichen und in Signale umgesetzt, die an die verschiedenen Motoren 17, 22, 30, 32, 34 weitergeleitet werden.

Begriffsliste

| 1 | Antriebsmotor |
|---|---|
| 2 | |
| 3 | Achse von T |
| 3A | Werkzeugspindel |
| 4 | Achse von W |
| 5 | Zahnflanke von T |
| 6 | Seitenbereich von 5 |
| 7 | Seitenbereich von 5 |
| 8 | Stirnseite von W |
| 9 | Stirnseite von W |
| 10 | Achse |
| 11 | Bett |
| 12 | Reitstock |
| 12A | Antriebsspindel |
| 13 | Reitstock |
| 13A | Reitstockspindel |
| 14 | Riementrieb |
| 15 | Ständer |
| 16 | Zustellschlitten |
| 17 | Motor |
| 18 | Spindel |
| 19 | Maschinensteuerung |
| 20 | Vorschubschlitten |
| 21 | Achse |
| 22 | Motor |
| 23 | Spindel |
| 24 | Bogenführung |
| 25 | Wiege |

26
27 Werkzeugkopf
28 Achse
29 mittlere Rotationsebene
30 Motor
31 Gestänge
32 Motor
33 Schneckentrieb
34 Motor
35 Getriebe
40-49 Punkte von T auf dem Vorschubweg
51 Randbereich
52 Sekundärgrat
53 Dehnmeßstreifen
54 Dehnmeßstreifen
55 Beschleunigungsaufnehmer
56 Beschleunigungsaufnehmer
57 Mikrofon
58 Körperschallaufnehmer
59 Drehübertrager
60-63 Punkte von T auf dem Vorschubweg
66-71 Punkte von T auf dem Vorschubweg
72 Verlagerungsaufnehmer
M Eingriffspunkt extrem
N Eingriffspunkt mittig
O Eingriffspunkt extrem
P Umkehrpunkt
Q Umkehrpunkt
T Werkzeug
W Werkstück
X Vorschubbewegung
Z Zustellbewegung
$f, f_1, f_2 ...$ Zustellhub
$s, s'$ Strecke von X
$\gamma$ Achskreuzwinkel
$\epsilon$ Diagonalwinkel
$\phi$ Kippwinkel
$b_T$ Breite von T
$b_W$ Breite von W
u Überdeckung

**Patentansprüche**

1. Verfahren zum Feinbearbeiten von balligen Zahnflanken an insbesondere gehärteten Zahnrädern (Werkstücken (W)) unter Zweiflankenanlage mit einem zahnrad- oder zahnstangenförmigen Werkzeug (T), das auf seinen Zahnflanken (5) eine abrasive, d.h. keine einheitlich gerichteten Schneidkanten aufweisende Oberfläche besitzt, insbesondere in Form einer Beschichtung mit Hartstoffkörnern, z.B. aus CBN oder Diamant, mit unter einem Achskreuzwinkel gekreuzten Achsen (3, 4) von Werkzeug und Werkstück, wobei das Werkzeug relativ zum Werkstück mindestens eine hin- und hergehende Vorschubbewegung (X) und mindestens eine kontinuierliche oder diskontinuierliche Zustellbewegung (Z) im Sinne einer Achsabstandsverringerung ausführt, wobei die Vorschubbewegung senkrecht zur gemeinsamen Normalen von Werkzeug und Werkstück und unter einem Winkel ($\epsilon$) schräg zur Werkstückachse erfolgt, und wobei nach Erreichen des Soll-Achsabstands noch mindestens eine Vorschubbewegung (X) ausgeführt wird ohne Zustellbewegung, und Wobei das Werkzeug (T) eine Kippbewegung (K) ausführt um eine Achse (10), die zumindest angenähert den Wälzzylinder des Werkzeugs (T) tangiert und sowohl senkrecht zur gemeinsamen Normalen (N) als auch senkrecht zur Werkstückachse (4) gerichtet ist,
dadurch gekennzeichnet,
daß das Werkzeug (T) erst während mindestens einer Vorschubbewegung (X) ohne Tiefenvorschub die Kippbewegung (K) ausführt

2. Verfahren nach dem Oberbegriff von Anspruch 1, dadurch gekennzeichnet, daß
   a) die in Verbindung mit der Zustellbewegung erfolgenden Vorschubbewegungen so bemessen sind, daß der vom Achskreuzpunkt auf dem Werkstück (W) in axialer Richtung zurückgelegte Weg beendet wird, ehe der Achskreuzpunkt die Stirnkanten der Zahnflanken erreicht hat,
   b) die ohne Zustellbewegung erfolgenden Vorschubbewegungen so bemessen sind, daß der vom Achskreuzpunkt auf dem Werkstück (W) in axialer Richtung zurückgelegte Weg frühestens dann beendet wird, wenn der Achskreuzpunkt die Stirnkanten der Zahnflanken erreicht hat, und
   c) das Werkzeug erst während mindestens einer Vorschubbewegung (X) ohne Zustellbewegung eine Kippbewegung (K) ausführt um eine Achse (10), die zumindest angenähert den Wälzzylinder des Werkzeugs (T) tangiert und sowohl senkrecht zur gemeinsamen Normalen (N) als auch senkrecht zur Werkstückachse (4) gerichtet ist.

3. Verfahren nach Patentanspruch 2, dadurch gekennzeichnet, daß alle mit der Zustellbewegung erfolgenden Vorschubbewegungen gleich lang sind.

4. Verfahren nach Patentanspruch 2, dadurch gekennzeichnet, daß
   a) die in Verbindung mit der Zustellbewegung erfolgenden Vorschubbewegungen so bemessen sind, daß der vom Achskreuzpunkt auf dem Werkstück (W) in axialer Richtung zurückgelegte Weg zumindest anfangs beendet wird, ehe der Achskreuzpunkt die Stirnkanten der Zahnflanken erreicht hat und mit fortschreitender Zustellbewegung mindestens einmal vergrößert wird;

b) wie bei Anspruch 2;

c) wie bei Anspruch 2.

5. Verfahren nach einem der vorstehenden Patentansprüche, dadurch gekennzeichnet, daß die mit der Zustellbewegung erfolgenden Vorschubbewegungen kontinuierlich vergrößert werden.

6. Verfahren nach einem der vorstehenden Patentansprüche, dadurch gekennzeichnet, daß die Vorschubbewegungen, bezogen auf die Zahnflanken, außermittig beginnen.

7. Verfahren nach einem der vorstehenden Patentansprüche, dadurch gekennzeichnet, daß die Zustellbewegung anfangs mit einer ersten Vorschubgeschwindigkeit bzw. Schrittgröße erfolgt und nach Erreichen eines wählbaren Achsabstands mit einer zweiten, gegenüber der ersten verringerten Vorschubgeschwindigkeit bzw. Schrittgröße erfolgt.

8. Verfahren nach einem der Patentansprüche 1 bis 6, dadurch gekennzeichnet, daß die Zustellbewegung zunächst mit einer ersten Vorschubgeschwindigkeit bzw. Schrittgröße erfolgt und dann durch eine sensitive Einrichtung anhand von von ihr gemessenen Kräften und/oder Durchbiegungen und/oder Drehmomenten und/oder Geräuschen und/oder sonstigen Schwingungen auf wenigstens eine zweite, gegenüber der ersten verringerte Vorschubgeschwindigkeit bzw. Schrittgröße heruntergeregelt wird.

9. Verfahren nach einem der vorstehenden Patentansprüche, gekennzeichnet durch die Verwendung eines Werkzeugs (T) mit in Zahnlängsrichtung nicht korrigierten Zähnen.

10. Verfahren nach einem der vorstehenden Patentansprüche, dadurch gekennzeichnet, daß zwischen dem Diagonalwinkel ($\epsilon$) und dem Achskreuzwinkel ($\gamma$) die Beziehung

$$\tan \varepsilon = \frac{1}{\tan \gamma}$$

besteht.

## Claims

1. A method for the high precision machining of crowned tooth flanks particularly on hardened toothed wheels (workpieces (W)), with contact on two flanks with a tool (T) in the shape of a toothed wheel or toothed rack which has an abrasive surface on its tooth flanks (5), i.e. a surface which does not have uniformly aligned cutting edges, more particularly in the form of a coating with crystals of a hard material, e.g. CBN or diamond, with the axes (3, 4) of the tool and the workpiece crossed at an axis crossing angle, wherein the tool performs in relation to the workpiece at least one reciprocating forward feed movement (X) and at least one continuous or intermittent infeed movement (Z) to reduce the distance between axes, wherein the forward feed movement occurs perpendicularly to the common normals of the tool and workpiece and obliquely to the workpiece axis at an angle ($\epsilon$), and wherein at least one further forward feed movement (X) is performed without the infeed movement when the desired distance between axes is achieved, and wherein the tool (T) performs a tilting movement (K) about an axis (10) which is at least approximately tangent to the rolling cylinder of the tool (T) and aligned both perpendicularly to the common normals (N) and perpendicularly to the axis (4) of the workpiece,

characterised in that the tool (T) only performs the tilting movement (K) in the course of at least one forward feed movement (X) without a down-feed.

2. A method according to the preamble of claim 1, characterised in that

a) the size of the forward feed movements occurring in conjunction with the infeed movement is such that the path covered from the axis crossing point on the workpiece (W) in the axial direction is ended before the axis crossing point has reached the front edges of the tooth flanks,

b) the size of the forward feed movements occurring without the infeed movement is such that the path covered from the axis crossing point on the workpiece (W) in the axial direction is ended at the earliest when the axis crossing point has reached the front edges of the tooth flanks, and

c) the tool performs a tilting movement (K) only in the course of at least one forward feed movement (X) without the infeed movement about an axis (10) which is at least approximately tangent to the rolling cylinder of the tool (T), and aligned both perpendicularly to the common normals (N) and perpendicularly to the axis (4) of the workpiece.

3. A method according to claim 2, characterised in that all the forward feed movements which occur with the infeed movement are of equal length.

4. A method according to claim 2, characterised in that
   a) the size of the forward feed movements occurring in conjunction with the infeed movement is such that the path covered from the axis crossing point on the workpiece (W) in the axial direction is ended at least initially before the axis crossing point has reached the front edges of the tooth flanks and with the infeed movement continuing, is increased at least once;
   b) as in claim 2;
   c) as in claim 2.

5. A method according to one of the preceding claims, characterised in that the forward feed movements occurring with the infeed movement are continuously increased.

6. A method according to one of the preceding claims, characterised in that the forward feed movements, relative to the tooth flanks, begin eccentrically.

7. A method according to one of the preceding claims, characterised in that the infeed movement occurs initially at a first forward feed speed or step size, and after a distance between axes which can be selected has been reached, occurs at a second forward feed speed or step size which is reduced in relation to the first one.

8. A method according to one of claims 1 to 6, characterised in that the infeed movement initially occurs at a first forward feed speed or step size and is then adjusted down to at least one second forward feed speed or step size, which is reduced in relation to the first one, by a sensitive device by means of forces and/or flexures and/or torques and/or sounds and/or other vibrations measured by the said sensitive device.

9. A method according to one of the preceding patent claims, characterised by the use of a tool (T) having teeth which are not corrected in the longitudinal direction of the teeth.

10. A method according to one of the preceding claims, characterised in that the equation

$$\tan \epsilon = \frac{1}{\tan \gamma}$$

applies between the diagonal angle ($\epsilon$) and the axis crossing angle ($\gamma$)

## Revendications

1. Procédé pour la finition de flancs de dents bombés notamment sur des roues dentées trempées (pièces d'oeuvre (W) ) sous application de deux flancs avec un outil (T) en forme de roue dentée ou de crémaillère, qui comporte sur ses flancs de dents (5) une surface abrasive, c'est-à-dire ne comportant pas d'arêtes de coupe orientées de façon homogène, notamment sous la forme d'un revêtement avec des grains de matière dure, par exemple en CBN ou bien en diamant, avec des axes (3, 4) de l'outil et de la pièce d'oeuvre se croisant selon un angle de croisement des axes, cependant que l'outil effectue par rapport à la pièce d'oeuvre, au moins un mouvement d'avance (X) en aller et retour et au moins un mouvement d'approche (Z) dans le sens d'une réduction de la distance entre axes, le mouvement d'avance s'effectuant perpendiculairement à la normale commune de l'outil et de la pièce d'oeuvre et sous un angle ($\epsilon$) obliquement par rapport à l'axe de la pièce d'oeuvre, et après que la distance de consigne entre les axes ait été atteinte, il est effectué encore au moins un mouvement d'avance (X) sans mouvement d'approche, et en ce que l'outil (T) effectue un mouvement de basculement (K) autour d'un axe (10) qui est au moins approximativement tangent au cylindre de roulement de l'outil (T) et qui est orienté aussi bien perpendiculairement aux normales communes (N) qu'également perpendiculairement à l'axe (4) de la pièce d'oeuvre, procédé caractérisé en ce que l'outil (T) n'effectue le mouvement de basculement (K) que pendant au moins un mouvement d'avance (X) sans avance en profondeur.

2. Procédé selon le préambule de la revendication 1, caractérisé en ce que :
   a) les mouvements d'avance s'effectuant en combinaison avec le mouvement d'approche sont mesurés de façon que le trajet parcouru en direction axiale sur la pièce d'oeuvre (W) par le point de croisement des axes, se termine avant que le point de croisement des axes ait atteint les bords frontaux des flancs de dents,

b) les mouvements d'avance s'effectuant sans mouvement d'approche sont mesurés de façon que le trajet parcouru en direction axiale sur la pièce d'oeuvre (W) par le point de croisement des axes, se terminent au plus tôt alors que le point de croisement des axes a atteint les bords frontaux des flancs de dents,

c) l'outil n'effectue que pendant au moins un mouvement d'avance (X) sans mouvement d'approche, un mouvement de basculement (K) autour d'un axe (10), qui est au moins approximativement tangent au cylindre de roulement de l'outil (T) et qui est orienté perpendiculairement, aussi bien par rapport aux normales communes (N) qu'également par rapport à l'axe (4) de la pièce d'oeuvre.

3. Procédé selon la revendication 2, caractérisé en ce que tous les mouvements d'avance s'effectuant avec le mouvement d'approche, sont de même longueur.

4. Procédé selon la revendication 2, caractérisé en ce que :

a) les mouvements d'avance s'effectuant en combinaison avec le mouvement d'approche sont mesurés de façon que le trajet parcouru en direction axiale sur la pièce d'oeuvre (W) par le point de croisement des axes, se termine, tout au moins au début, avant que le point de croisement des axes ait atteint les bords frontaux des flancs de dents, et ce trajet est augmenté au moins une fois lorsque le mouvement d'approche se poursuit,

b) les mouvements d'avance s'effectuant sans mouvement d'approche sont mesurés de façon que le trajet parcouru en direction axiale sur la pièce d'oeuvre (W) par le point de croisement des axes, se termine au plus tôt alors que le point de croisement des axes a atteint les bords frontaux des flancs de dents,

c) l'outil n'effectue que pendant au moins un mouvement d'avance (X) sans mouvement d'approche, un mouvement de basculement (K) sur un axe (10), qui est au moins approximativement tangent au cylindre de roulement de l'outil (T) et qui est orienté perpendiculairement, aussi bien par rapport aux normales communes (N) qu'également par rapport à l'axe (4) de la pièce d'oeuvre.

5. Procédé selon une des précédentes revendications, caractérisé en ce que les mouvements d'avance s'effectuant avec le mouvement d'approche sont continuellement augmentés.

6. Procédé selon une des précédentes revendications, caractérisé en ce que les mouvements d'avance rapportés aux flancs de dents, débutent en dehors du milieu.

7. Procédé selon une des précédentes revendications, caractérisé en ce que le mouvement d'approche s'effectue au début avec une première vitesse d'avance ou grandeur de pas, et après qu'ait été atteinte une distance entre axes susceptible d'être choisie, le mouvement d'approche s'effectue avec une deuxième vitesse d'avance ou grandeur de pas, réduite par rapport à la première.

8. Procédé selon une des revendications 1 à 6, caractérisé en ce que le mouvement d'approche s'effectue tout d'abord avec une première vitesse d'avance ou bien grandeur de pas, et est ensuite réglé vers le bas sur une moins une seconde vitesse d'avance réduite par rapport à la première, sous l'action d'un dispositif sensitif et à l'aide des efforts et/ou des flexions, et/ou des couples, et/ou des bruits, et/ou d'autres vibrations, détectés par ce dispositif.

9. Procédé selon une des précédentes revendications, caractérisé en ce qu'on utilise un outil (T) dont les dents ne sont pas corrigés en direction de leur longueur.

10. Procédé selon une des précédentes revendications, caractérisé en ce que, entre l'angle de diagonale ($\epsilon$) et l'angle de croisement des axes ($\gamma$) on a la relation :

$$\tan \epsilon \qquad \frac{1}{\tan \gamma}$$

Fig.2

Fig.1

Fig.6

Fig.7

Fig.3

Fig.4

Fig.5

## Fig.8

## Fig.9

EP 0 311 778 B1

Fig.10

Fig.11

Fig.12

Fig.13

Fig.14

14

Fig.15